Europäisches Patentamt

**European Patent Office**

**Office européen des brevets**

(19)

(11) Publication number: **0 088 263**
A1

# (12) EUROPEAN PATENT APPLICATION

(21) Application number: **83101588.8**

(22) Date of filing: **19.02.83**

(51) Int. Cl.³: **C 08 L 67/02**

(30) Priority: **03.03.82 US 354209**

(43) Date of publication of application: **14.09.83**
Bulletin **83/37**

(84) Designated Contracting States: **DE FR GB IT NL**

(71) Applicant: **GENERAL ELECTRIC COMPANY, 1 River Road, Schenectady New York 12305 (US)**

(72) Inventor: **Semen, John, 8643 Sharlane Drive, Baton Rouge Louisiana 70809 (US)**

(74) Representative: **Schüler, Horst, Dr. et al, Kaiserstrasse 41, D-6000 Frankfurt/Main 1 (DE)**

(54) **Molding composition.**

(57) An improved poly(1,4-butylene terephthalate) molding composition is described. An amount of from 1 to 20% of poly(2-methyl-1,3-propylene terephthalate) modifier is incorporated into the composition. This modifier provides a desirable increase in the surface gloss of molded articles prepared with the compositions of the invention.

EP 0 088 263 A1

10167-8CV-3151

## MOLDING COMPOSITION

## BACKGROUND OF THE INVENTION

Thermoplastic compositions containing terephthalate resins have become increasingly significant as extrusion and molding compositions.

The exploitation of such polyester compositions as molding resins was initially retarded because of drawbacks of its most widely available member -- poly(ethylene terephthalate). Because this polyester crystallizes very slowly, molded articles are dimensionally unstable after removal from the mold unless unattractively long mold cycles and high mold temperatures are employed.

Poly(butylene terephthalate) is a rapidly crystallizing polyester and is highly suited for injection molding and extrusion applications. Blends of PBT with PET, as described in U.S. 3,953,394 of Fox et al. are also molding compositions useful at low molding temperatures and rapid cycles times.

Other terephthalate resin compositions containing modifier polymers have also proven superior. Thus, in U.S. Patent No. 3,937,757 of Seydl et al., it is disclosed that from 5 to 20% by weight of polyolefin will increase the tracking resistance of a poly(butylene terephthalate) composition.

Similarly, U.S. Patent 4,267,286 of Campbell describes an impact modifier for use with poly(1,4-butylene terephthalate) resin or polyester copolymers. That modifier is a combination of polyacrylate resin or a vinyl aromatic-diene block copolymer resin with a poly(1,3-butylene terephthalate) which includes units derived from 2-methyl-1,3-propanediol.

Notwithstanding these discoveries, further improvement of terephthalate resin molding compositions remains desirable. In particular, enhancement of the appearance of readily producible molded articles is sought.

Introduction to the Invention - An improved poly(1,4-butylene terephthalate) molding composition is provided. An amount of from 1 to 20% of poly(2-methyl-1,3-propylene terephthalate) modifier is incorporated into the composition. This modifier provides a desirable increase in the surface gloss of molded articles prepared with this composition.

Description to the Invention - Terephthalate resins are available commercially or can be prepared by techniques such as the alcoholysis of esters of terephthalic acid with a diol and subsequent polymerization, as heating a glycol with the free acid or with a halide derivative thereof, and similar conventional processes.

These polyesters are desirably of high molecular weight and have an intrinsic viscosity of at least about 0.6 deciliters/gram for poly(ethylene terephthalate) and preferably at least 0.8 deciliters/gram, for PBT as measured in a 60:40 phenol/tetrachloroethane mixture at 30°C.

The poly(1,4-butylene terephthalate) forming the resin base for the present compositions may include a small amount --e.g. up to 5 mole percent based on the terephthalate units-- of a branching component containing at least three ester forming groups. These branched resins are especially useful when high melt strength is important.

The branching component can be one which provides branching in the acid unit portion of the polyester or in the glycol unit portion. It can also be a hybrid. Illustrative of such branching components are tri- or tetracarboxylic acids, such as trimesic acid, pyromellitic acid, and lower alkyl esters thereof, and the like or preferably, polyols and especially preferably, tetrols, such as pentaerythritol, triols, such as tri-methylolpropane, or dihydroxy carboxylic acids and hydroxydicarboxylic acids and derivatives, such as 2,2-bis(hydroxymethyl) propionic acid, and the like. Suitable branched poly(1,4-butylene terephthalate) resins and their preparation are described in U.S. Patent 3,953,404 of Borman.

The copolyesters, suitably described by Borman et al. in German Offen. 2,756,167 may also find application as a component in the resin base of the subject invention.

By the term "resin base" it is meant that the poly(1,4-butylene terephthalate) forms a significant portion of the present compositions. This portion is ordinarily at least 30% by weight of the total composition.

The poly(2-methyl-1,3-propylene terephthalate) resins of the present invention can be made in known ways, for example by one of the procedures outlined above, but substituting a 2-methyl-1,3-butylene glycol or a reactive derivative thereof.

The amount of the poly(2-methyl-1,3-propylene terephthalate) modifier may range from 1 to 20% by weight of the poly(butylene terephthalate) resin base of the composition. Preferably, it is from 2 to 15% of such weight. Such amounts have been found to provide an improved appearance for molded articles, most particularly by provision of enhanced surface gloss.

This amount of poly(2-methyl-1,3-propylene terephthalate) also does not significantly affect the crystallization rate(s) of other resin(s) which may be present. Thus, the poly(2-methyl-1,3-propylene terephthalate) appears to act as an amorphous phase extender which does not interfere with the desirable properties of the resin base or of other constituent(s) of the composition.

The present compositions may, in addition to the poly(2-methyl-1,3-propylene terephthalate) modifier, consist essentially of poly(1,4-butylene terephthalate). Alternatively, however, an auxiliary thermoplastic polymer or resin --i.e. a polymer other than one of the foregoing terephthalates--may be incorporated into these compositions for the purposes for which are already known.

Optional auxiliary resins include the poly(ethylene terephthalate), polyolefins, and other resins discussed above. In addition, rubbers or other impact modifiers provide optional additives. Similarly nylons, polyphenylene ether and the like may be incorporated into the present compositions. Preferably, however, the poly(1,4-butylene terephthalate) base resin remains a major constituent of the composition. It will ordinarily comprise at least from 30 to 80%, more preferably from 50% to 80% by weight of the total composition.

Within the foregoing parameters, the present composition may contain other conventional ingredients. In certain preferred embodiments, for example, the composition will include filler, especially reinforcing filler such as fibrous (filamentous) glass, or mineral fillers, such as clay, mica, talc and the like, preferably clay. The fillers can be untreated or treated with silane or coupling agents, etc.

Similarly, the compositions may contain an effective amount of a conventional flame retardant agent. As is well known, flame retardants can be based on elementary red phosphorus, phosphorus compounds, halogen and nitrogen compounds alone or preferably in further combination with synergists, such as antimony compounds. Especially useful are polymeric and oligomeric flame retardant agents comprising tetrabromobisphenol-A carbonate units, see, for example, U.S. Patent 3,833,685 of Wambach and U.S. Patent No. 3,855,-277 of Fox.

Other ingredients, such as dyes, pigments, drip retardants, and the like can also be added for their conventionally employed purposes. Such optional ingredients including those discussed in greater detail above, may be present in any amount up to about 70% by weight. However, amounts of from about 10 to 50% by weight of the total composition are preferred.

The compositions of this invention can be prepared by any number of procedures. In one way, the resin base, poly(1,4-butylene terephthalate), and any optional ingredients are put into an extrusion compounder to produce molding pellets.

In another procedure, the modifier is mixed with the other ingredients by dry blending, then either fluxed on a mill and comminuted, or then are extruded and chopped. The modifier can also be mixed with the other ingredients and directly molded, e.g., by injection or transfer molding techniques.

It is always important to thoroughly free all of the ingredients; poly(1,4-butylene terephthalate) resins, modifier if used, and any optional, conventional additives, from as much water as possible.

In addition, compounding is desirably carried out to ensure that the residence time in the machine is short; the temperature is carefully controlled; the friction heat is utilized; and an intimate blend is obtained.

Although it is not essential, best results are ordinarily obtained if the ingredients are pre-compounded, pelletized and then molded. Pre-compounding can be carried out in conventional equipment. For example, after carefully pre-drying the polyester and modifier and the reinforcing agent, or filler, for example, for four hours at 120°C., a single screw extruder is fed with a dry blend of the ingredients, the screw employed having a long transition section to ensure proper melting. On the other hand, a twin screw extrusion machine, e.g., a 53 mm Werner Pfleiderer machine, can be fed with resin and additives at the feed port and reinforcement donwstream. In either case, a generally suitable machine temperature will be about 230° to 300°C.

The pre-compounded composition can be extruded and cut up into molding compounds such as conventional granules, pellets etc., by standard techniques.

The composition can be molded in any equipment conventionally used for thermoplastic compositions, e.g., a Van Dorn type injection molding machine with conventional cylinder temperatures, e.g., 230° - 280°C. and conventional mold temperatures, e.g., 55° - 100°C.

The following examples are given by way of illustration only and are not intended as a limitation on the scope of this invention. Many variations are possible without departing from its spirit and scope. Unless otherwise specified herein all proportions are provided on a weight basis.

## EXAMPLE 1

Sample molding compositions of poly(1,4-butylene terephthalate) containing various amounts of poly(2-methyl-1,3-propylene terephthalate) modifier are prepared by co-extrusion in a standard plastic extruder.

Testing of these samples reveals that their physical properties, including moldability and crystallization rates, are substantially uniform. The appearances of molded articles produced from them, however, differ as follows:

| SAMPLE NO. | WEIGHT PERCENT MODIFIER | SURFACE GLOSS |
|---|---|---|
| 1 | 0% | 5 |
| 2 | 2% | 4 |
| 3 | 3% | 3 |
| 4 | 10% | 1 |

graded on a subjective scale from 1 to 5 where 1 represents best gloss and 5 represents least gloss.

### EXAMPLE 2

Blends of PBT with 5 and 10% poly(2-methyl-1,3-butylene terephthalate) were prepared by co-extrusion. The crystallization·rates of the blends were measured at 150°F. using the method of depolarized light microscopy. Surprisingly, even the presence of 10% of the amorphous additive did not affect the crystallization rates of the blends.

| CONTROL POLYBUTYLENE TEREPH-THALATE | | 1,4-PBT + 5% 1,3-PBT | | 1,4-PBT + 10% 1,3-PBT | |
|---|---|---|---|---|---|
| $t_i$ | $t_{\frac{1}{2}}$ | $t_i$ | $t_{\frac{1}{2}}$ | $t_i$ | $t_{\frac{1}{2}}$ |
| 1.17 | 0.23 | 1.13 | 0.26 | 1.20 | 0.21 |

$t_i$ = time to begining crystallization (seconds)

$t_{\frac{1}{2}}$ = time from beginning crystallization to 50% of ultimate crystallinity (seconds)

All values were an average of at least five determinations.

This illustrates the dramatic and specific effect of the present modifiers on the present terephthalate compositions.

The above identified patents and/or patent applications are incorporated herein by reference.

Obviously, other modifications and variations of the present invention are possible in the light of the above teachings. It is, therefore, to be understood that changes may be made in the particular embodiments of the invention described which are within the full intended scope of the invention as defined by the appended claims.

WHAT IS CLAIMED:

1. A composition comprising a poly(1,4-butylene terephthalate) resin base and from 1 to 20% by weight of said resin base of poly(2-methyl-1,3-propylene terephthalate) modifier.

2. The composition of Claim 1, wherein the modifier comprises from 2 to 15% by weight of the resin base.

3. The composition of Claim 2, wherein the composition consists essentially of poly(1,4-butylene terephthalate) and poly(2-methyl-1,3-propylene terephthalate).

4. The composition of Claim 2, wherein said composition is a molded article.

5. The composition of Claim 1, wherein said composition additionally contains filler.

6. The composition of Claim 5, wherein the poly-(1,4-butylene terephthalate) comprises from 30 to 80% by total composition weight.

7. The composition of Claim 1, wherein said composition additionally contains auxiliary thermoplastic polymer.

8. The composition of Claim 1 wherein said composition contains in addition an impact modifying rubber.

9.    The composition of Claim 7, wherein the poly-(1,4-butylene terephthalate) comprises from 30 to 80% by total composition weight.

10.   The composition of Claim 1, wherein the poly-(1,4-butylene terephthalate) comprises from 30 to 80% by total composition weight.

European Patent
Office

**EUROPEAN SEARCH REPORT**

0088263

Application number

EP  83 10 1588

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,X | US-A-4 267 286  (R.W. CAMPBELL) <br><br> * Examples  1,  2;  tables 1, 2; column  5, lines 27-34; column 8, lines 30-34 * | 1,2,5, 7,8,10 | C 08 L  67/02 |
| A | DE-A-2 707 852  (CIBA-GEIGY AG) <br> * Claims 1, 5, 10, 12, 13 * | 1,4,5 | |
| A | DE-A-2 525 513  (CELANESE CORP.) <br> * Claim 1 * | 1,5,7 | |

**TECHNICAL FIELDS SEARCHED (Int. Cl. ³)**

C 08 L  67/00

The present search report has been drawn up for all claims

| Place of search | Date of completion of the search | Examiner |
|---|---|---|
| BERLIN | 31-05-1983 | HASS C V F |